# EUROPEAN PATENT SPECIFICATION

(11) **EP 1 751 760 B1**
(45) Date of publication and mention of the grant of the patent: **31.12.2008**
(21) Application number: 05743432.6
(22) Date of filing: 27.04.2005
(51) Int. Cl.: G11B 33/04

(54) **LIGHTWEIGHT, LOW COST MULTIMEDIA PACKAGE AND METHOD FOR MAKING SAME**
LEICHTE KOSTENGÜNSTIGE MULTIMEDIA-PACKUNG UND HERSTELLUNGSVERFAHREN DAFÜR
ENSEMBLE MULTIMEDIA LEGER, A FAIBLE COUT ET PROCEDE DE FABRICATION CORRESPONDANT

(30) Priority: 27.04.2004 US 565661 P
(43) Date of publication of application: 14.02.2007
(73) Proprietor: MeadWestvaco Corporation, Glen Allen, VA 23060 (US)
(72) Inventor: GELARDI, John A., KENNEBUNKPORT, ME 04046 (US); KAROW, Meredith, Hatboro, PA 19040 (US); RIGBY, William Roger, Midlothian, VA 23114 (US); WADE, Michael, Chester, VA 23831 (US)
(74) Representative: Baldwin, Mark
(86) International application number: PCT/US2005/014578
(87) International publication number: WO 2005/106884

(56) References cited:
- EP-A- 1 003 174
- US-A- 4 819 799
- US-A- 5 772 019
- US-A- 6 086 105
- US-A1- 2002 139 699
- US-A1- 2003 111 368

## Description

BACKGROUND OF THE INVENTION

FIELD OF THE INVENTION

The present invention relates generally to media storage containers, and more particularly, media storage containers for securely retaining a data carrying media such as a compact disc (CD) or digital video disc (DVD).

BRIEF DESCRIPTION OF THE RELATED ART

Various media storage containers are known in the art. Conventional CD or DVD enclosures or packages used in the multimedia and entertainment industries are of different styles, sizes and designs. These storage containers are either reusable containers, such as jewel boxes and clamshells, or disposable containers, such as paper packages and the like.

Disposable containers may be used to mail promotional discs to potential customers or to store discs inside of other containers. Disposable storage containers must be designed to securely retain the discs so that the discs do not freely move within the container so that the discs are not damaged. The containers must also allow the discs to be easily removed from the container while preventing the discs from falling out of the container when the container is initially opened. Although some existing media storage containers achieve these goals and have achieved success in the art, there remains room in the art for improvement.

Accordingly, there is a need for a simple, inexpensive to manufacture, lightweight package for data carriers.

SUMMARY OF THE DISCLOSURE

The present invention improves upon and solves the problems associated with the prior art by providing, among other things, a lightweight multimedia package and method of making that addresses the above identified needs.

In particular, the present invention is directed to a data carrying media package or storage container for retaining and storing a compact disc or other data carrying media that includes a generally planar lid defining an inner surface and an outer surface, a generally planar base having an inner surface and an outer surface, wherein the inner surface of the base is secured to the inner surface of the lid along the respective peripheries thereof. The inner surface of the base also includes a recessed panel and side walls defining a recessed pocket dimensioned to house at least one compact disc or data carrying media therein.

The container also includes an opening flap defined by at least one perforated line, the flap being configured, dimensioned and positioned to permit access to the recessed pocket upon opening thereof. The opening flap can be disposed on the lid or on the base. Preferably, the opening flap is disposed adjacent the recessed pocket.

In one alternative embodiment, a container of the present invention includes a lifting tab and/or a finger well for facilitating opening the flap.

In another alternative embodiment, a container of the present invention includes at least one support member disposed in the recessed pocket for maintaining the position of a data carrying media therein.

In another alternative embodiment, the perforated line defining the opening flap includes portions which differ in their resistance to separation and opening thereof. The opening flap may also be defined by three perforated lines and a folding line, or may also be defined entirely by perforated lines and removable from the container.

A container of the present invention may include an opening flap that is resealable after opening thereof. A non-permanent adhesive material can be disposed opposite the opening flap to facilitate resealing the opening flap thereon.

For display and promotional purposes, the outer surface of the lid and the outer surface of the base may include text and/or pictures disposed thereon. Literature or other materials can be disposed in the recessed pocket along with the data carrying media.

These and other aspects of the present invention will become more readily apparent to those having ordinary skill in the art from the following description of the invention taken in conjunction with the drawings.

BRIEF DESCRIPTION OF THE FIGURES

So that those having ordinary skill in the art to which the present invention pertains will more readily understand how to make and use the present invention, an embodiment thereof will be described in detail with reference to the drawings, wherein:

Fig. 1 is a perspective view of one embodiment of a lid in accordance with the data carrying media storage container of the present invention;

Fig. 2 is a perspective view of one embodiment of a base in accordance with the data carrying media storage container of the present invention;

Fig. 3 is an exploded perspective view of the data carrying media storage container constructed in accordance with the embodiments of lid and base shown in Figs. 1 and 2, respectively, illustrating the inner surface of the lid, outer surface of the base, promotional booklet and CD, among other things;

Fig. 4 is an exploded perspective view of the data carrying media storage container constructed in accordance with the embodiments of lid and base shown in Figs. 1 and 2, respectively, illustrating the inner surface of the base, outer surface of the lid, promotional booklet and CD, among other things;

Fig. 5 is a perspective view of the lid shown in Fig. 1, illustrating the opening of one embodiment of a flap defined thereon;

Fig. 6 is a perspective view of the data carrying media storage container of the present invention with the openable flap of the lid in a partially open position to show the base cavity with a CD housed therein;

Fig. 7 is a front view of another embodiment of the data carrying media storage container of the present invention, illustrating the lid and an alternative openable flap configuration defined thereon, among other things;

Fig. 8 is a rear view of another embodiment of the data carrying media storage container of the present invention, illustrating the base and an alternative openable flap configuration defined thereon that is also a removable strip from the container, among other things;

Fig. 9 is a rear view of another embodiment of the data carrying media storage container of the present invention, illustrating the base and an alternative openable flap configuration defined thereon that is also removable from the container, among other things; and

Fig. 10 is a perspective view of another embodiment of the data carrying media storage container of the present invention that includes support members for maintaining the data carrying media in position within the container.

DETAILED DESCRIPTION OF THE INVENTION

It is to be understood that the system and method of the present invention may be advantageously employed without the incorporation of each of the features disclosed herein. It is to be further understood that modifications and variations may be utilized without departure from the spirit and scope of this inventive system and method, as those skilled in the art will readily understand. Such modifications and variations are considered to be within the purview and scope of the appended claims and their equivalents.

According to the present invention, the need for an inexpensive, lightweight media storage container can be met by forming an enclosure out of inexpensive pressed paperboard, specifically from a paperboard base and cover. Typically, the base will be formed by molding a paperboard blank between a female press mold and a suitably configured male mold to create a shallow cavity which is dimensionally suitable for receiving a data carrier and, optionally, a promotional booklet or insert card. As used herein, the term "data carrier" or "data carrying media" is intended to encompass any form of object capable of carrying machine or computer-readable data, including, but not limited to, compact discs, digital video disks, floppy disks, tape cassettes, credit cards, phone cards, smart-media cards, flash memory cards, data cartridges and computer read-only or random access memory chips.

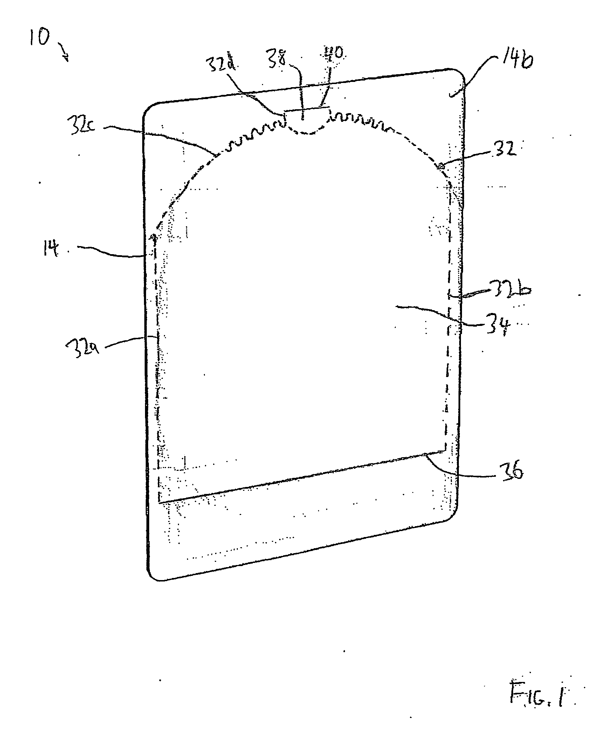

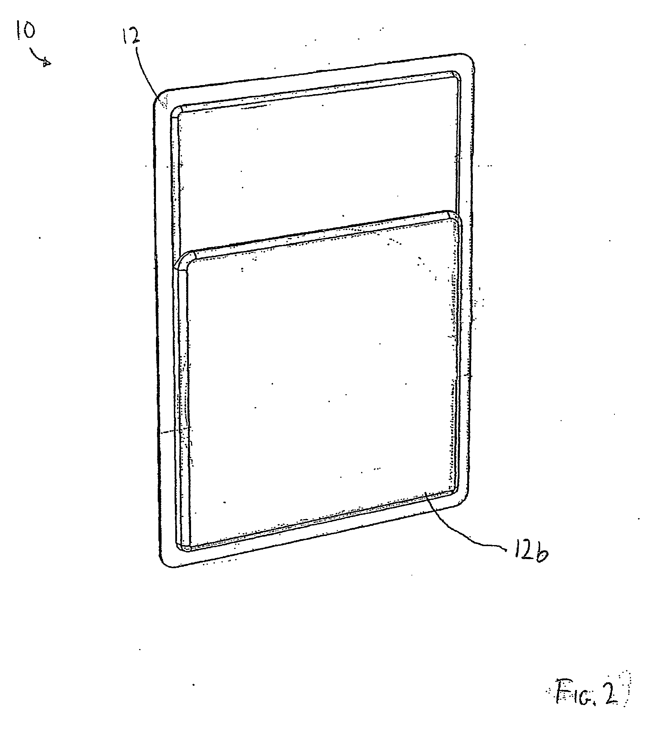

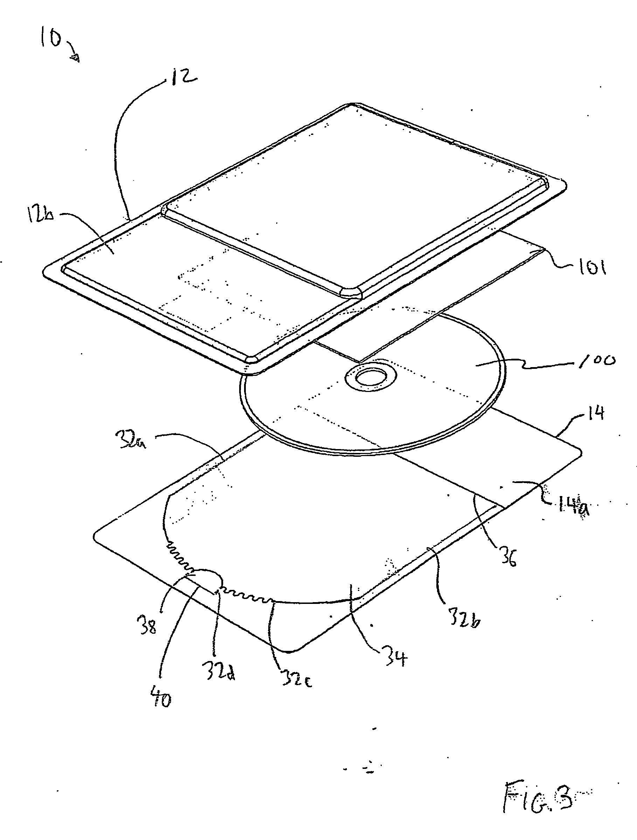

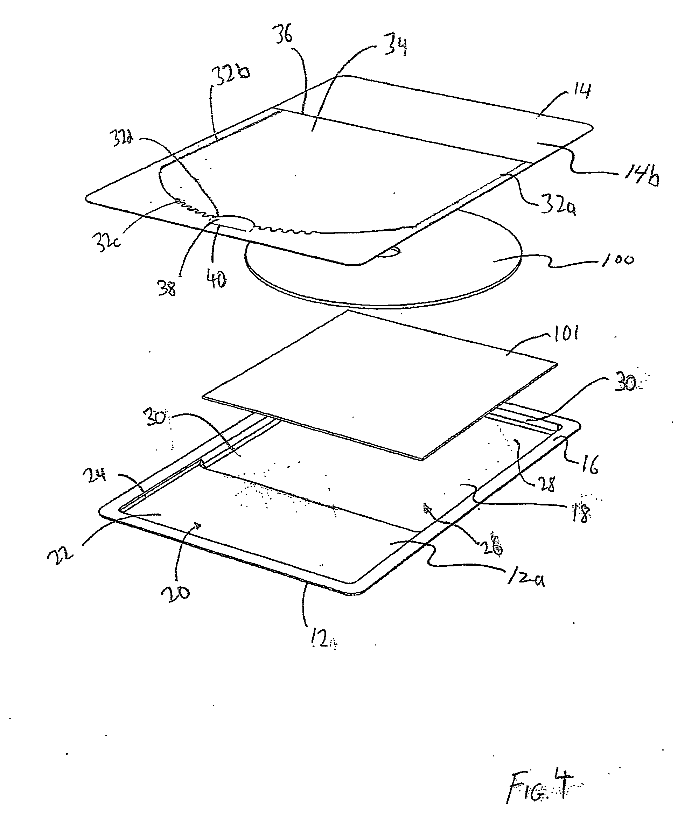

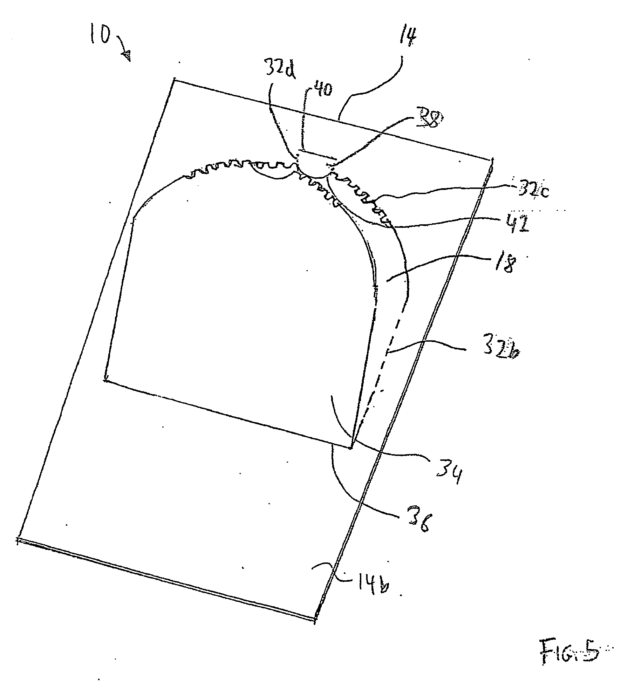

Referring now to the drawings wherein like reference numerals identify similar aspects and/or features of the subject invention there is illustrated in Figs. 1-6, a media storage container configured in accordance with a preferred embodiment of the subject invention and designated generally by reference numeral 10. Container 10 provides a housing for a data carrying media 100, which, for purposes of illustrating the features of a container constructed in accordance with the present invention, is depicted hereinafter as a CD type disc.

Container 10 includes a base 12 and a lid 14 secured at least to a peripheral edge portion 16 of interior side 12a of base 12 which contacts interior side 14a of lid 14 upon formation of container 10. Outer surface 12b of base 12 and outer surface 14b of lid 14 may be used to display descriptive and promotional information, for example, regarding the content of data carrying media 100 held within container 10.

A cavity 18 is formed in base 12, for example by press molding, which includes a first pocket 20 formed by a first recessed panel 22 and first recessed side walls 24 and a second pocket 26 formed by a second recessed panel 28 and second recessed side walls 30. Preferably, second pocket 26 is further recessed than first pocket 20, that is, relative to the plane of lid 14. In this embodiment, second pocket 26 is generally rectangular and appropriately dimensioned for receiving data carrying media 100 in the form of a CD or other data carrier therein while preferably permitting only minimal movement of data carrier 100. Pocket 26 may also hold promotional literature 101 along with data carrier 100.

In a preferred embodiment of the invention, lid 14 may be pressed from a paperboard sheet or may simply comprise a flat sheet of paperboard. Lid 14 is sealed to base 12 after data carrier 100 and promotional literature 101 are inserted into pocket 26 of cavity 18. Preferably, lid 14 is heat sealed along its periphery to the upper peripheral surface of base 12, for example by coating the underside of lid 14, at least along a portion of its periphery, with a low density polyethylene coating to function as the sealing medium.

An opening feature is desirably incorporated into base 12 or lid 14 to allow access to data carrier 100 and promotional literature 101 within cavity 18. In the embodiment shown in Figs.1-6, lid 14 includes perforated line 32 that includes two side edge portions 32a and 32b and a generally arcuate top portion 32c which define a generally rectangular flap 34 pivotable about a fold line 36 positioned to oppose top portion 32c. Preferably, a central lifting tab 38 is formed by a generally semi-circular portion 32d adjacent perforated line 32c and an opposing fold line 40, thus also forming a finger well 42 thereunder. Lifting tab 38 and finger well 42 allow a user to better grasp and pull open flap 34.

To open flap 34, a user would open (or alternatively, press in) lifting tab 38, permitting greater access to the underside of flap 34 via finger well 42. The underside of flap 34 can be used for leverage in pulling open flap 34, which is pivotable about fold line 36 to allow access to cavity 18. Preferably, and as shown herein, perforated lines 32 include portions having wider notches, thus increasing the resistive force against being opened, such as perforated portions 32c adjacent finger well 42, while portions 32a and 32b of perforated line 32 consist of narrower notches, and thus, are less resistive to being torn.

Container 10 may be intended to be disposed immediately or reusable. It is contemplated that data carrier 100, after and between uses, can be returned and stored in cavity 18. For this reason, it is desirable that at least the flap 34 be reclosable. This can be accomplished by forming the flap 34 in such a manner that a portion thereof, when closed, overlaps a portion of the base 12, or by using lifting tab 38 to secure flap 34.

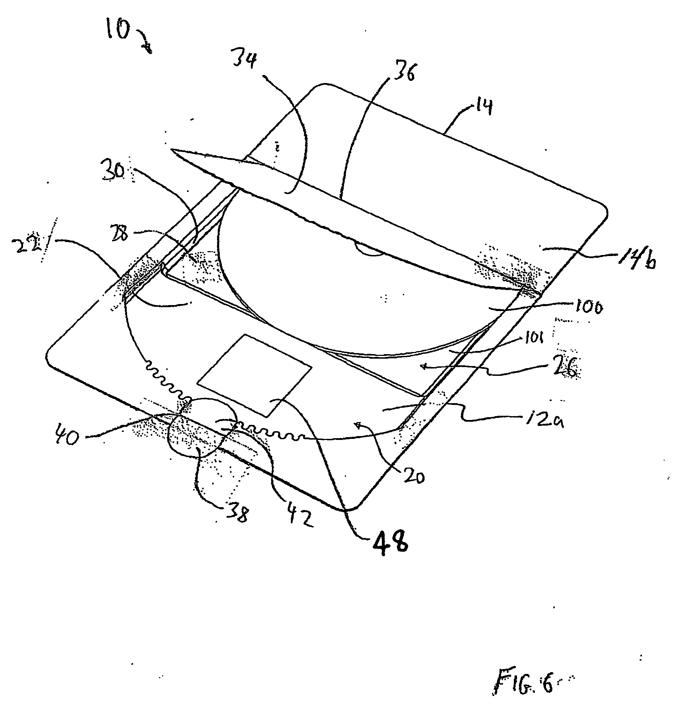

Alternatively, an adhesive patch 48 (shown in Fig. 6) can be disposed in first pocket 20 of cavity 18. Flap 34 can be closed and releasably adhered by a readily and repeatedly releasable and readily and repeatedly resealable adhesive, such as is well known, for example in connection with note paper. In this manner, the flap 34 may be readily peeled back from the base portion 12 to access data carrying media 100 and may be readily resealed after the data carrying media 100 is returned to cavity 16.

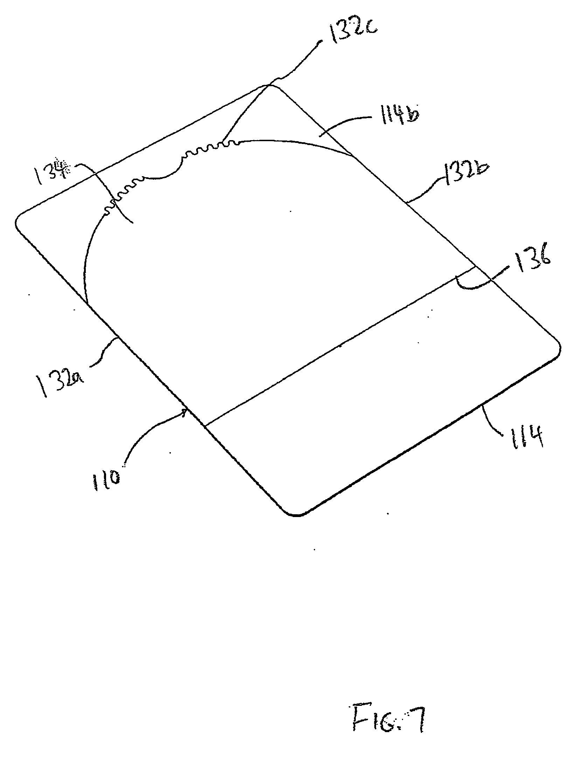

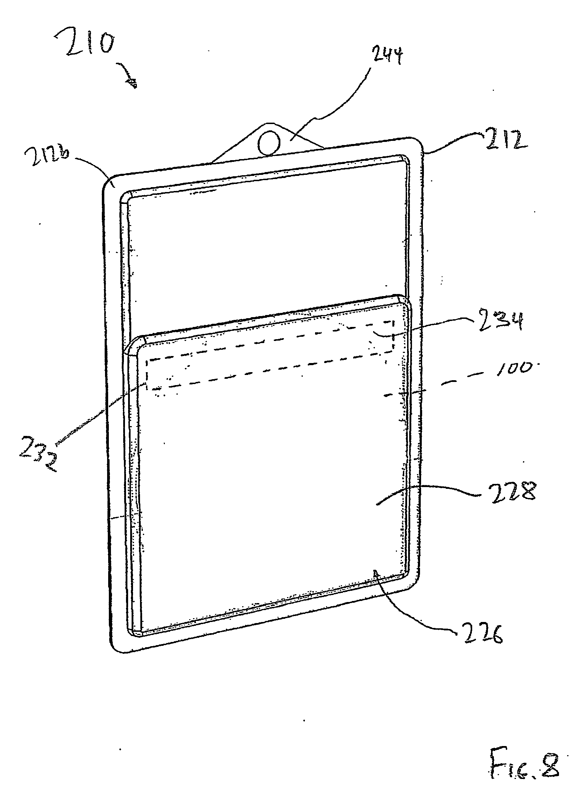

Fig. 7 illustrates an alternative container 110 constructed in accordance with the present invention in which the edges of lid 114 comprise side edges 132a and 132b of flap 134. Fig. 8 illustrates another alternative embodiment of the present invention, in which container 210 has a base 212 including a completely removable flap 234 defined by perforated line 232 in recessed panel 228 of second pocket 226. Flap 234 is generally rectangular and by removal thereof permits access to data carrier 100 housed in pocket 226. Flap 234 may also include a lifting tab and/or finger well as described above. In this embodiment, container 210 further includes a hang tag 244 disposed along an upper margin of container 210 to facilitate display or storage thereof

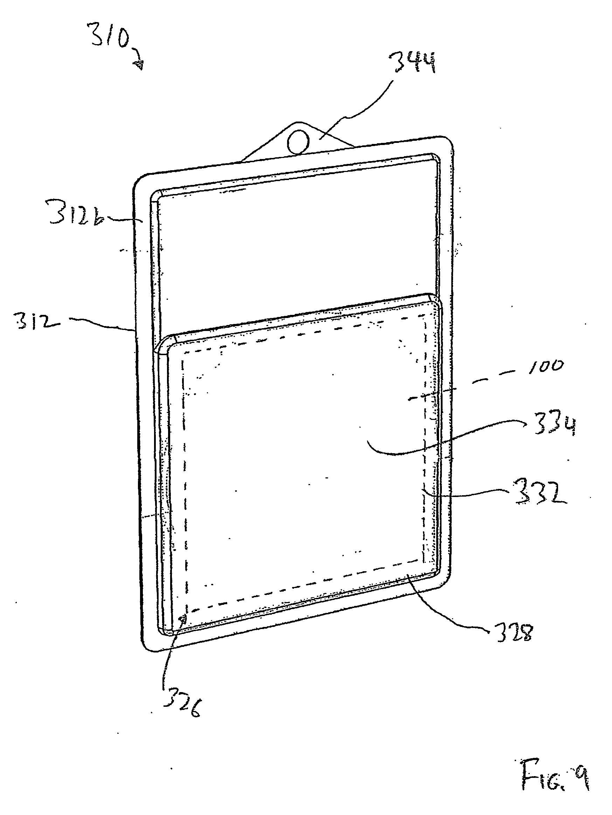

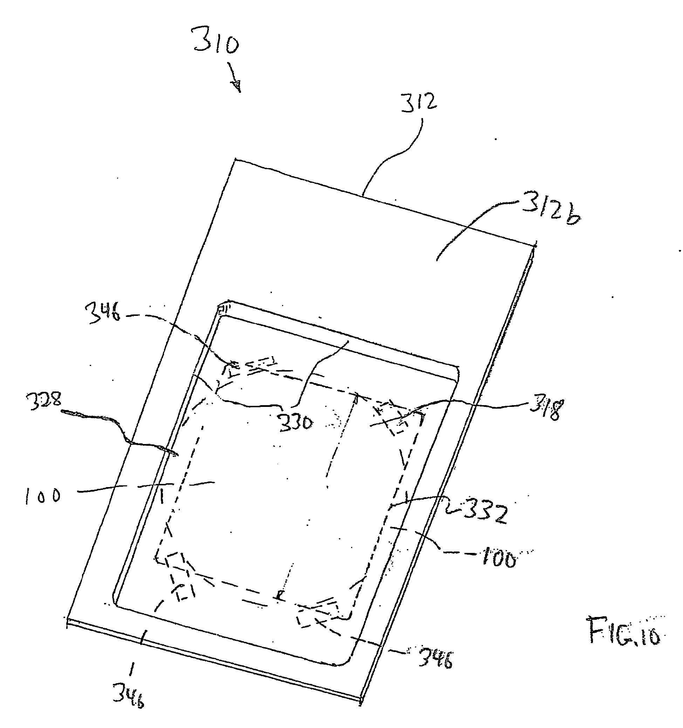

Figs. 9 and 10 illustrate another alternative embodiment of a media storage container constructed in accordance with the present invention. Container 310 includes a removable flap 334 defined by perforated line 332 in recessed panel 328 of second pocket 326. Flap 334 is generally rectangular and has sides that are smaller in length than the radius or sides of media 100. In this embodiment, cavity 318 includes supports 346 (shown in phantom in Fig. 9) generally disposed along the periphery of data carrying media 100 for further limiting movement thereof within cavity 318. Supports may be adjacent or secured to side 314a of lid 314, or alternatively, be adjacent or secured to side 312a of base 312.

The aforementioned embodiment provides possible configurations in accordance with the present invention, and should not be considered as limiting the scope of the invention in any way. It should be readily apparent that the lid and/or base may include a variety of opening features for accessing the contents of the cavity, and if perforated opening features are involved, these perforations may come in a variety of desired shapes or forms. Preferably, the opening feature is sized smaller than the data carrying media to prevent the data carrying media from falling from the cavity after opening the container of the present invention.

It is also advantageous to optionally incorporate a security device in the container of the present invention, for example by adhering a radio frequency identification device (RFID) to a surface of the first or second pocket which can aid in detecting unauthorized removal of the container of the present invention from a premises, such as a retail store. Alternatively, or in addition, a security/inventory control/traceable device, such as a Sensomatic tag, can be adhered to a surface of the container of the present invention for purposes of security and/or to aid in tracing the container through distribution channels and/or for inventory control.

It has been found that paperboard formulated with added stretch properties is particularly desirable as the material for forming the base and lid of the container of the present invention. In particular, paperboard which is higher in pine fibers than hardwood fibers is especially desirable to confer advantageous stretch properties on the paperboard. Specifically, paperboard having a minimum of 35% content of pine fibers is especially desirable.

The base of the container is desirably formed by placing a paperboard blank, coated on its clay side (*i.e*., the print surface) with a UV overprint coating, into a mold with the clay coated side positioned in contact with the female side of the mold. The UV overprint coating protects the printed surface of the paperboard against heat and abrasion which attends the press molding process.

The male mold, is the heated side of the tool during the formation of the base. Both the male and female molds are appropriately shaped and dimensioned to create a cavity for receiving the desired data carrier. The male and female molds are brought together to form the base, with the desired shaped and dimensioned cavity, from the paperboard blank.

The lid, which is desirably a flat sheet of paperboard, is sealed onto the base after the data carrying media is loaded into the cavity. Typically, during the press molding of paperboard, moisture has to be introduced into the process to keep the paper from cracking. According to the present process, at least so long as the cavity remains of a depth sufficient for a single data carrier with minimal literature, the introduction of moisture into the process can be avoided. As a consequence, the resulting container remains lightweight and has all the advantages of an inexpensive to manufacture, lightweight container, such as postage savings during mailing.

Although the media storage container of the subject invention has been described with respect to a preferred embodiment, those skilled in the art will readily appreciate that changes and modifications may be made thereto without departing from the scope of the subject invention as defined by the appended claims,

## Claims

1. A media storage container (10) for retaining and storing a data carrying media (100) comprising:
a) a generally planar lid (14) defining an inner surface (14a) and an outer surface (14b);
b) a generally planar base (12) having an inner surface (12a) including a first recessed panel (22) and side walls (24) defining a first recessed pocket (20) dimensioned to house at least one data carrying media therein and an outer surface (12b) wherein the inner surface of the base is secured to the inner surface of the lid along the respective peripheries (16) thereof; and
c) an opening flap (34) defined by at least one perforated line, (32) the flap being configured, dimensioned and positioned to permit access to the recessed pocket upon opening thereof; and
d) **characterised by** a second recessed pocket (26) defined by a second recessed panel (28) having at least three side walls (30), the second recessed pocket comprising a resealable adhesive portion (48) operable upon opening of said opening flap for resealing said media storage container.

2. A media storage container as recited in claim 1, wherein the opening flap is disposed on the lid or on the base.

3. A media storage container as recited in either of claims 1 or 2, wherein the opening flap is disposed adjacent the recessed pocket.

4. A media storage container as recited in any preceding claim, further comprising a lifting tab (38) and as a finger well (42) for facilitating opening the flap.

5. A media storage container according to any preceding claim, further comprising at least one support member (34b) disposed in the recessed pocket for maintaining the position of a data carrying media therein.

6. A media storage container as recited in any preceding claim, wherein the perforated line defining the opening flap includes portions (32a, 32b, 32c) of differing resistance to separation thereof.

7. A media storage container as recited in any preceding claim, wherein the opening flap is defined by three perforated lines (32a, 32b, 32c) and a folding line (40).

8. A media storage container as recited in any preceding claim, wherein the opening flap is defined entirely by perforated lines and is removable.

9. A media storage container as recited in any preceding claim, further comprising a hanging tab to facilitate displaying thereof.

10. A media storage container as recited in any preceding claim, wherein the outer surface of the lid and the outer surface of the base include text disposed thereon.

11. A media storage container as recited in any preceding claim, wherein literature is disposed in the recessed pocket along with the data carrying media.

## Patentansprüche

1. Datenträgerbehälter (10) für das Aufnehmen und das Aufbewahren von Datenträgern (100) umfassend:
a) einen im Wesentlichen ebenen Deckel (14), der eine Innenseite (14a) und eine Außenseite (14b) definiert;
b) einen im Wesentlichen ebenen Grundkörper (12) mit einer Innenseite (12a), einschließlich einer ersten ausgesparten Wandfläche (22) und Seitenwände (24), die eine erste ausgesparte Tasche (20) definieren, die dimensioniert ist, wenigstens einen Datenträger darin aufzunehmen, sowie eine Außenseite (12b), wobei die Innenseite des Grundkörpers an die Innenseite des Deckels entlang der jeweiligen Peripherien (16) davon befestigt ist; und
c) eine Öffnungsklappe (34), die durch wenigstens eine perforierte Linie (32) definiert ist, wobei die Klappe ausgestaltet, dimensioniert und positioniert ist, um den Zugriff auf die ausgesparte Tasche zu ermöglichen, sobald diese geöffnet ist; und
d) **gekennzeichnet durch** eine zweite ausgesparte Tasche (26), die von einer zweiten ausgesparten Wandfläche (28) definiert wird, die wenigstens drei Seitenwände (30) aufweist, wobei die zweite ausgesparte Tasche einen wiederverschließbaren Haftabschnitt (48) umfasst, der nach dem Öffnen der Öffnungsklappe wirksam ist, den Datenträgerbehälter wieder zu verschließen.

2. Datenträgerbehälter nach Anspruch 1, wobei die Öffnungsklappe auf dem Deckel oder auf dem Grundkörper angeordnet ist.

3. Datenträgerbehälter nach Anspruch 1 oder 2, wobei die Öffnungsklappe angrenzend der ausgesparten Tasche angeordnet ist.

4. Datenträgerbehälter nach einem der vorhergehenden Ansprüche, ferner umfassend eine Hebelasche (38) und eine Fingervertiefung (42), um das Öffnen der Klappe zu erleichtern.

5. Datenträgerbehälter nach einem der vorhergehenden Ansprüche, ferner umfassend wenigstens ein Trägerelement (34b), das in der ausgesparten Tasche angeordnet ist, um die Position eines Datenträgers darin beizubehalten.

6. Datenträgerbehälter nach einem der vorhergehenden Ansprüche, wobei die perforierte Linie, die die Öffnungsklappe definiert, Abschnitte (32a, 32b, 32c) umfasst, die unterschiedliche Widerstände gegenüber einer Trennung davon aufweisen.

7. Datenträgerbehälter nach einem der vorhergehenden Ansprüche, wobei die Öffnungsklappe durch drei perforierte Linien (32a, 32b, 32c) und eine Faltlinie (40) definiert wird.

8. Datenträgerbehälter nach einem der vorhergehenden Ansprüche, wobei die Öffnungsklappe vollständig durch perforierte Linien definiert wird und entfernt werden kann.

9. Datenträgerbehälter nach einem der vorhergehenden Ansprüche, ferner umfassend eine hängende Lasche, um die Anzeige davon zu erleichtern.

10. Datenträgerbehälter nach einem der vorhergehenden Ansprüche, wobei die Außenseite des Deckels und die Außenseite des Grundkörpers mit Text versehen sind.

11. Datenträgerbehälter nach einem der vorhergehenden Ansprüche, wobei Literatur zusammen mit dem Datenträger in der ausgesparten Tasche angeordnet ist.

## Revendications

1. Contenant pour le stockage de supports informatiques (10) destiné à retenir et à stocker un support de données (100) comprenant:
a) un couvercle généralement planaire (14) qui délimite une surface intérieure (14a) et une surface extérieure (14b);
b) une base généralement planaire (12) ayant une surface intérieure (12a), qui comporte un premier panneau évidé (22) et des parois latérales (24) délimitant une première poche évidée (20) conçue pour y accueillir au moins un support de stockage de données, et une surface extérieure (12b) où la surface intérieure de la base est fixée à la surface intérieure du couvercle le long des périphéries (16) de ce dernier, et
c) un rabat d'ouverture (34) délimité par au moins une ligne perforée, (32) le rabat étant configuré, conçu et positionné de manière à pouvoir permettre l'accès à la poche évidée lors de l'ouverture de celle-ci, et
d) **caractérisé par** une deuxième poche évidée (26) délimitée par un deuxième panneau évidé (28) ayant au moins trois parois latérales (30), la deuxième poche évidée comprend une partie adhésive, pouvant être refermée (48), actionnée à l'ouverture dudit rabat d'ouverture pour refermer ledit contenant pour le stockage de supports informatiques.

2. Contenant pour le stockage de supports informatiques selon la revendication 1, dans lequel le rabat d'ouverture est situé sur le couvercle ou sur la base.

3. Contenant pour le stockage de supports informatiques selon l'une des revendications 1 ou 2, où le rabat d'ouverture est situé à côté de la poche évidée.

4. Contenant pour le stockage de supports informatiques selon l'une quelconque des revendications précédentes, comprenant en outre une languette de levage (38) et une cavité pour le doigt (42) pour faciliter l'ouverture du rabat.

5. Contenant pour le stockage de supports informatiques selon l'une quelconque des revendications précédentes, comprenant en outre au moins un membre de support (34b) disposé dans la poche évidée pour le maintien en position d'un support de stockage de données.

6. Contenant pour le stockage de supports informatiques selon l'une quelconque des revendications précédentes, où la ligne perforée délimitant le rabat d'ouverture comprend des parties (32a, 32b, 32c) de différente résistance qui permettent sa séparation.

7. Contenant pour le stockage de supports informatiques selon l'une quelconque des revendications précédentes, où le rabat d'ouverture est délimité par trois lignes perforées (32a, 32b, 32c) et une ligne de pliage (40).

8. Contenant pour le stockage de supports informatiques selon l'une quelconque des revendications précédentes, où le rabat d'ouverture est entièrement délimité par les lignes perforées et il est amovible.

9. Contenant pour le stockage de supports informatiques selon l'une quelconque des revendications précédentes, comprenant une languette de suspension pour faciliter son affichage.

10. Contenant pour le stockage de supports informatiques selon l'une quelconque des revendications précédentes, où la surface externe du couvercle et la surface extérieure de la base incluent un texte situé sur celles-ci.

11. Contenant pour le stockage de supports informatiques selon l'une quelconque des revendications précédentes, où un texte est disposé dans la poche évidée avec le support de stockage de données.
